# EUROPÄISCHE PATENTSCHRIFT

(11) **EP 3 768 925 B1**
(45) Veröffentlichungstag und Bekanntmachung des Hinweises auf die Patenterteilung: **28.05.2025**
(21) Anmeldenummer: 19712938.0
(22) Anmeldetag: 18.03.2019
(51) Int. Cl.: E05F 11/38

(54) **MITNEHMER FÜR EINEN FAHRZEUGFENSTERHEBER**
DRIVER ELEMENT FOR A MOTOR VEHICLE WINDOW LIFTER
ENTRAÎNEUR POUR LÈVE-VITRE DE VÉHICULE

(30) Priorität: 22.03.2018 DE 102018204432
(43) Veröffentlichungstag der Anmeldung: 27.01.2021
(73) Patentinhaber: Brose Fahrzeugteile SE & Co. Kommanditgesellschaft, Bamberg, 96052 Bamberg (DE)
(72) Erfinder: MÜLLER, Jörg, 96050 Bamberg (DE); TRAUTMANN, Michael, 95512 Neudrossenfeld (DE)
(74) Vertreter: Maikowski & Ninnemann Patentanwälte Partnerschaft mbB
(86) Internationale Anmeldenummer: PCT/EP2019/056647
(87) Internationale Veröffentlichungsnummer: WO 2019/179908

(56) Entgegenhaltungen:
- EP-A1- 0 208 237
- CN-U- 202 718 517
- CN-U- 206 233 747
- CN-U- 206 844 922
- DE-A1- 102010 013 945
- DE-U1- 20 202 551
- US-A1- 2017 241 181

## Beschreibung

Die vorgeschlagene Lösung betrifft einen Mitnehmer für einen Fahrzeugfensterheber, der mit einer zu verstellenden Fensterscheibe verbindbar ist.

Mitnehmer für einen Fahrzeugfensterheber sind in vielfacher Ausführung weithin bekannt beispielsweise aus der DE 202 02 551 U1, US 2017/241181 A1, EP 0 208 237 A1 oder DE 10 2010 013 945 A1. Regelmäßig sind derartige Mitnehmer an Führungsschienen verschieblich geführt und im Bereich einer Unterkante einer Fensterscheibe mit der Fensterscheibe verbunden. An dem Mitnehmer greift dann üblicherweise ein flexibles Zugmittel, zum Beispiel in Form eines Seilzuges, an, um eine Verstellkraft zum Verstellen der Fensterscheibe über das flexible Zugmittel an den Mitnehmer zu übertragen. Der Mitnehmer kann dann entlang der Führungsschiene verschoben werden, um die Fensterscheibe anzuheben oder abzusenken.

Die CN206233747U offenbart einen Mitnehmer gemäß dem Oberbegriff des Anspruchs 1.

Bei aus der Praxis bekannten Mitnehmern, insbesondere bei Mitnehmer für Fahrzeugfensterheber, besteht regelmäßig Verbesserungsbedarf mit Blick auf unterschiedliche Montage- und/oder Bauraumsituationen. Beispielsweise besteht regelmäßig Bedarf nach konstruktiven Verbesserungen für einen Mitnehmer, um die Montage der Fensterscheibe an den Mitnehmer, die Anbindung der Fensterscheibe an den Mitnehmer, die Verbindung eines flexiblen Zugmittels mit dem Mitnehmer und/oder die Haltbarkeit des Mitnehmers und einer hiermit gebildeten Fensterheberbaugruppe zu verbessern.

Vor diesem Hintergrund wird ein verbesserter Mitnehmer gemäß Anspruch 1 vorgeschlagen.

Ein vorgeschlagener Mitnehmer umfasst hierbei einen Mitnehmerkörper und einen an dem Mitnehmerkörper vorgesehenen Scheibenverbindungsbereich, über den der Mitnehmer an der zu verstellenden Fensterscheibe festlegbar ist. Dieser Scheibenverbindungsbereich definiert einen Verbindungsspalt, in den die zu verbindende Fensterscheibe mit einer Unterkante einzuführen ist, sodass die Unterkante im bestimmungsgemäß verbundenen Zustand einer Basis des Scheibenverbindungsbereichs gegenüberliegt. Im Hinblick auf eine verbesserte Montage der Fensterscheibe an den Mitnehmer sowie eine verbesserte Anbindung der Fensterscheibe an den Mitnehmer ist ferner vorgeschlagen, dass der Scheibenverbindungsbereich zusätzlich das Folgende aufweist:
- zwei an dem Mitnehmerkörper vorgesehene Verbindungsbügel, an denen jeweils eine Rastnase für den formschlüssigen Eingriff in eine an der Fensterscheibe vorgesehene Verbindungsöffnung vorgesehen ist und denen jeweils mindestens ein von der Basis vorstehender Positionierungsabschnitt gegenüberliegt, wobei, für die Montage der Fensterscheibe an den Mitnehmer entlang einer Montagerichtung, die Verbindungsbügel an dem Mitnehmerkörper elastisch verlagerbar sind und die den Verbindungsbügeln gegenüberliegenden Positionierungsabschnitte jeweils eine geneigt zu der Montagerichtung der Fensterscheibe verlaufende Führungsfläche ausbilden, über die die in den Verbindungsspalt eingeführte Unterkante der Fensterscheibe in Richtung der Basis geleitet wird.

Ein vorgeschlagener Scheibenverbindungsbereich weist somit zwei Verbindungsbügel mit jeweils einem gegenüberliegenden und eine geneigt verlaufende Führungsfläche ausbildenden Positionierungsabschnitt auf.

Gegebenenfalls kann der Scheibenverbindungsbereich ergänzend mindestens einen an der Basis vorstehenden Auflageabschnitt aus einem elastischen Material für die Auflage der Unterkante der Fensterscheibe aufweisen.

Über den vorgesehenen Positionierungsabschnitt, kann die bereits in den Verbindungsspalt des Scheibenverbindungsbereichs eingeführte Unterkante der Fensterscheibe gezielt in Richtung der Basis und damit eine Rastposition geleitet werden, in der die Rastnase des Verbindungsbügels in die vorgesehene Verbindungsöffnung der Fensterscheibe einschnappt. Mit dem Positionierungsabschnitt ist hierbei beispielsweise eine Stabilisierung der in den Verbindungsspalt bereits eingeführten Fensterscheibe senkrecht zur Montagerichtung erreichbar. So wird die Fensterscheibe typischerweise bei bereits mit dem Mitnehmer vormontiertem Fahrzeugfensterheber von oben an den in einer Montageposition gehaltenen Mitnehmer herangeführt. Die in den Verbindungsspalt eingeführte Unterkante verdrängt dabei zunächst den elastisch verlagerbaren Verbindungsbügel quer zur Montagerichtung, bis die Fensterscheibe so weit der Basis des Scheibenverbindungsbereich angenähert wurde, dass die Rastnase des jeweiligen Verbindungsbügels in die Verbindungsöffnung der Fensterscheibe einschnappen kann. Es hat sich in diesem Zusammenhang gezeigt, dass unter Umständen durch die in den Verbindungsspalt eingeführte Unterkante der Fensterscheibe ein Verbindungsbügel unerwünscht weit verlagert, insbesondere verschwenkt wird und damit ein Verrasten der Rastnase mit einer Verbindungsöffnung der Fensterscheibe unterbleibt. Über den zusätzlichen Positionierungsabschnitt, der dem Verbindungsbügel gegenüberliegt, kann dann innerhalb des Verbindungsspalts eine zusätzliche Stabilisierung der bereits eingeführten Scheibenunterkante und eines die Scheibenunterkante ausbildenden Randes der Fensterscheibe erreicht werden.

Mit mindestens einem optionalen, an der Basis vorstehenden Auflageabschnitt kann ferner nach bestimmungsgemäßer Montage der Fensterscheibe an den Mitnehmer erreicht werden, dass die Fensterscheibe an ihrer Unterkante elastisch an dem Mitnehmer gelagert ist. Der mindestens eine an der Basis vorstehende Auflageabschnitt aus einem elastischen Material stellt eine gegebenenfalls nur lokale Auflage der Unterkante der Fensterscheibe an der Basis sicher, wenn die Fensterscheibe bestimmungsgemäß mit dem Mitnehmer verbunden wurde. Es kann somit eine Fensterheberbaugruppe mit Mitnehmer und Fensterscheibe bereitgestellt werden, bei der die Fensterscheibe mit ihrer Unterkante lediglich an einem oder mehreren an der Basis vorstehenden Auflageabschnitten aus einem elastischen Material aufliegt. Abseits des einen oder der mehreren Auflageabschnitte liegt die Fensterscheibe mit ihrer Unterkante nicht an der Basis an, sodass die Unterkante abseits eines oder mehrerer Auflageabschnitte zu der Basis beabstandet und ein schmaler Spalt vorhanden ist. Es ist somit durch einen elastisch verformbaren Auflageabschnitt ein Federweg bereitgestellt, um den die Fensterscheibe bezüglich des Mitnehmers im Betrieb des Fensterhebers verlagerbar ist, zum Beispiel wenn die Fensterscheibe in eine (obere) Endposition verstellt wird. Zum Beispiel ist über den mindestens einen vorstehenden Auflageabschnitt aus elastischem Material zumindest eine geringfügige Relativbewegung zwischen der Fensterscheibe und der Mitnehmer gestattet, wenn die Fensterscheibe in eine Scheibendichtung zum vollständigen Schließen einer Fensteröffnung einfährt.

Über den in Richtung der Scheibenunterkante vorstehenden Auflageabschnitt an der Basis des Mitnehmers lässt sich im Übrigen in einer Ausführungsvariante auch ein Umschaltgeräusch vermeiden, wenn die Fensterscheibe in eine entgegengesetzte Verstellrichtung verstellt wird. Über den elastischen Auflageabschnitt ist ferner stets eine definierte Abstützung der Scheibe an dem Mitnehmer gegeben, die auch bei geringfügigen Kippbewegungen der Fensterscheibe beim Anheben der Fensterscheibe eine definierte Auflage der (Scheiben-) Unterkante an dem Mitnehmer sicherstellt.

Die Verbindungsbügel des Scheibenverbindungsbereichs sind erfindungsgemäß jeweils um eine Schwenkachse elastisch schwenkbar, wobei die Basis des Scheibenverbindungsbereich, an der der Positionierungsabschnitt vorgesehen ist, zu dieser Schwenkachse beabstandet ist. An dem Mitnehmer ist somit ein räumlicher Versatz zwischen einer Schwenkachse der an den Mitnehmer vorgesehenen Verbindungsbügel zu der Basis vorgesehen, der die Scheibenunterkante bei bestimmungsgemäß an den Mitnehmer festgelegter Fensterscheibe gegenüberliegt. Eine solche Beabstandung zwischen der Schwenkachse der Verbindungsbügel und der Basis, an der beispielsweise die Auflageabschnitte für die Auflage der Unterkante der Fensterscheibe vorgesehen sind, kann beispielsweise einen größeren Öffnungswinkel durch die elastische Verlagerung des Verbindungsbügels bei der Montage der Fensterscheibe an den Mitnehmer gestatten.

Erfindungsgemäß ist ein jeweiliger Positionierungsabschnitt des Scheibenverbindungsbereichs für die Montage der Fensterscheibe an dem Mitnehmer ebenfalls elastisch verlagerbar, und zwar insbesondere relativ zu dem Verbindungsbügel. Der zur Stabilisierung der bereits in den Verbindungsspalt eingeführten Scheibenunterkante dienende Positionierungsabschnitt kann somit ebenfalls eine gewisse elastische Verlagerbarkeit aufweisen, um das Erreichen der Rastposition der Fensterscheibe an dem Mitnehmer zu unterstützen, in der dann die Rastnase des Verbindungsbügels in die Verbindungsöffnung an der Fensterscheibe einschnappt. Hierbei ist der dem Verbindungsbügel gegenüberliegende Positionierungsabschnitt bei der Montage der Fensterscheibe beispielsweise gerade entgegengesetzt zu dem Verbindungsbügel schwenkbar, und zwar unter der Wirkung der entlang der Montagerichtung mit der Unterkante in den Verbindungsspalt eingeführten Fensterscheibe. Die Fensterscheibe kann somit mit ihrer Unterkante zunächst auf den Verbindungsbügel einwirken, um diesen in eine erste Schwenkrichtung (z.B. in Richtung einer Außenseite) zu verschwenken, bevor anschließend, bei weiterer Einführung der Fensterscheibe in den Verbindungsspalt des Mitnehmers, die Unterkante über das Entlangführen an der geneigt verlaufenen Führungsfläche des Positionierungsabschnitts den Positionierungsabschnitt ebenfalls elastisch verlagert. Die elastische Verlagerung des Positionierungsabschnitt erfolgt hierbei dann entgegengesetzt zu der Schwenkrichtung des Verbindungsbügels (z.B. in Richtung einer Innenseite). Der Positionierungsabschnitt kann somit insbesondere - gegebenenfalls zusammen mit der Basis - relativ zu dem Verbindungsbügel elastisch verlagerbar sein.

Erfindungsgemäß ist ein Verbindungsbügel des Scheibenverbindungsbereichs jeweils um eine erste Schwenkachse elastisch an dem Mitnehmerkörper schwenkbar und der Positionierungsabschnitt des Scheibenverbindungsbereichs ist um eine zu der ersten Schwenkachse beabstandete zweite Schwenkachse elastisch schwenkbar. Somit sind die - gegebenenfalls parallel zueinander verlaufenden - ersten und zweiten Schwenkachsen des Verbindungsbügels einerseits und des Positionierungsabschnitts andererseits gezielt räumlich zueinander entlang der Montagerichtung der Fensterscheibe zueinander versetzt. Hierdurch lässt sich insbesondere ein sukzessives elastisches Schwenken des Verbindungsbügels und des Positionierungsabschnitts in Abhängigkeit von dem Grad der Einführung der Scheibenunterkante in den Verbindungsspalt des Mitnehmers realisieren, ohne hierbei an dem Scheibenverbindungsbereich aufgrund der in unterschiedliche Richtungen wirkenden Belastungen für das Schwenken des Verbindungsbügels und des Positionierungsabschnitts versteifen zu müssen.

Erfindungsgemäß sind die zwei Verbindungsbügel des Scheibenverbindungsbereichs jeweils U-förmig ausgebildet, wobei über zwei Schenkel und einen die Schenkel verbindenden Kopfabschnitt eines U-förmigen Verbindungsbügels jeweils eine Aussparung in dem jeweiligen Verbindungsbügel umrandet ist. An dem Kopfabschnitt ist beispielsweise die Rastnase des jeweiligen Verbindungsbügels ausgebildet, sodass über die zwei Schenkel eine elastische Verlagerung des mit der Rastnase versehenen Kopfabschnitts ermöglicht ist.

In einer Weiterbildung liegt der zusätzliche Positionierungsabschnitt mit seiner geneigt zur Montagerichtung verlaufenden Führungsfläche gerade der in dem Verbindungsbügel ausgebildeten Aussparung (quer zur Montagerichtung) gegenüber.

Erfindungsgemäß wird vorgesehen, dass die Basis, an deren Auflageabschnitt, gegebenenfalls an deren vorstehenden Auflageabschnitt aus einem elastischen Material, die Unterkante der Fensterscheibe aufliegen soll, durch einen Sockelabschnitt des Mitnehmers ausgebildet ist, der an dem Mitnehmerkörper in Richtung des Kopfabschnitts des U-förmigen Verbindungsbügels vorsteht. Die Ausbildung der Basis durch einen Sockelabschnitt kann hierbei insbesondere der Beabstandung der Basis zu der Schwenkachse des Verbindungsbügels dienen, um die der Verbindungsbügel bei der Montage der Fensterscheibe an dem Mitnehmer elastisch verlagerbar ist. Über den vorstehenden Sockelabschnitt kann ferner eine elastische Verlagerbarkeit des an der Basis vorgesehenen Positionierungsabschnitts integriert sein und/oder der Positionierungsabschnitt ist gerade an der sockelartig vorstehenden Basis elastisch verlagerbar ausgeführt.

Der erstreckt sich zumindest teilweise in der Aussparung des Verbindungsbügels.

Dies ermöglicht nicht nur die kompakte Ausführung des Mitnehmers mit Verbindungsbügel und Positionierungsabschnitt. Vielmehr ist über den sich zumindest teilweise in der Aussparung des Verbindungsbügels erstreckenden Sockelabschnitt in einer möglichen Weiterbildung auch erreicht, dass ein an der Basis zusätzlich auf Seiten des Verbindungsbügels vorgesehener Lagerfinger oder -vorsprung für die eingeführte Fensterscheibe gerade zwischen den zwei Schenkeln des Verbindungsbügels vorhanden sein kann. Ein solcher an dem Sockelabschnitt vorgesehener und zwischen den zwei Schenkeln befindlicher Lagerfinger oder -vorsprung kann bei bestimmungsgemäß an den Mitnehmer montierter Fensterscheibe eine (zusätzliche) Abstützung quer zu der Montagerichtung der Fensterscheibe an den Mitnehmer bereitstellen. Beispielsweise liegt bei bestimmungsgemäß montierter Fensterscheibe ein Abschnitt der Fensterscheibe gerade zwischen dem Lagerfinger oder -vorsprung und dem Positionierungsabschnitt vor, die beide an der durch den Sockelabschnitt gebildeten Basis vorstehen.

Der Positionierungsabschnitt kann grundsätzlich unterschiedliche Geometrien und Konturen aufweisen. In einer Ausführungsvariante ist der Positionierungsabschnitt beispielsweise stiftförmig ausgebildet. Der Verlängerungsabschnitt kann somit in dieser Ausführungsvariante, bezogen auf einen bestimmungsgemäß eingebauten Zustand des Mitnehmers, stiftförmig nach oben von der Basis vorstehen.

In einer Ausführungsvariante sind zwei sich gegenüberliegende Seiten des Verbindungsspalts des Scheibenverbindungsbereichs insbesondere durch (einerseits) den Verbindungsbügel und (andererseits) einen an dem Mitnehmerkörper vorstehenden Lagerabschnitt definiert. Der mindestens eine Verbindungsbügel und der vorstehende, zum Beispiel stegförmige, Lagerabschnitt definieren somit den Verbindungsspalt, in den die Unterkante der Fensterscheibe einzuführen ist, um die Fensterscheibe bestimmungsgemäß mit dem Mitnehmer zu verbinden. Der mit seiner geneigt verlaufenden Führungsfläche ausgebildete Positionierungsabschnitt ist dementsprechend zusätzlich vorgesehen und erst bei bereits in den Verbindungsspalt eingeführter Unterkante der Fensterscheibe wirksam, um die Unterkante der Fensterscheibe letztlich in Richtung der Basis und damit die Rastposition für das Einschnappen der Rastnase zu leiten.

Grundsätzlich können an dem Mitnehmer auch mehr als zwei Verbindungsbügel vorgesehen sein. Insbesondere für einen einsträngigen Fensterheber bietet sich die Festlegung der Fensterscheibe über zwei jeweils mit einer Rastnase versehene Verbindungsbügel an, die dann in zwei an der Fensterscheibe vorgesehene Verbindungsöffnungen einrasten können.

In einer hierauf basierenden Weiterbildung ist der vorstehend angesprochene Lagerabschnitt gerade zwischen den zwei Verbindungsbügeln vorgesehen. Während dann die Verbindungsbügel bei bestimmungsgemäß an den Mitnehmer montierter Fensterscheibe auf einer Seite der Fensterscheibe von dem Mitnehmerkörper vorstehen, steht der Lagerabschnitt an der gegenüberliegenden Seite der Fensterscheibe vor. Dementsprechend ist ein Abschnitt der Fensterscheibe an der Unterkante der Fensterscheibe hier in einem Verbindungsspalt aufgenommen, der einerseits durch die zwei Verbindungsbügel und andererseits durch den Lagerabschnitt definiert ist.

Ein an der Basis vorstehender Auflageabschnitt des Scheibenverbindungsbereichs kann beispielsweise durch eine Weichkomponente ausgebildet sein. Beispielsweise ist diese Weichkomponente an die Basis angespritzt. Hierbei kann die Basis aus einer Hartkomponente bestehen. Während die gegebenenfalls angespritzte Weichkomponente somit zum Beispiel elastisch komprimierbar ist, ist die Hartkomponente der Basis vergleichsweise steif. Beispielsweise ist die Basis aus einem thermoplastischen Material, wie zum Beispiel Polypropylen oder Polyamid gebildet. Die hieran angespritzte Weichkomponente, die den mindestens einen Auflageabschnitt ausbildet, besteht zum Beispiel aus einem thermoplastischen Elastomer, wie zum Beispiel thermoplastischem Copolyester.

In einer Weiterbildung ist der Auflageabschnitt durch eine lokal vorstehende Aufdickung der Weichkomponente an der Basis gebildet. Die Weichkomponente kann hierbei insbesondere an einem Sockelabschnitt vorgesehen sein, der sich zumindest teilweise in einer Aussparung eines U-förmigen Verbindungsbügels erstreckt und/oder an einer Basis, die einen Positionierungsabschnitt aufweist.

In einer Ausführungsvariante der vorgeschlagenen Lösung weist ein vorgeschlagener Mitnehmer mindestens ein Flüssigkeitsführungselement zum Abführen von Flüssigkeit von dem Mitnehmerkörper auf. Das mindestens eine Flüssigkeitsführungselement kann hierbei Teil einer Flüssigkeitsführungsstruktur sein, über die Flüssigkeit von dem Mitnehmerkörper abgeführt wird, wenn diese bestimmungsgemäß als Komponente eines Fensterhebers montiert ist.

Mithilfe des Flüssigkeitsführungselements ist eine Struktur an dem Mitnehmer bereitgestellt, insbesondere an dem Mitnehmerkörper ausgebildet, mithilfe derer Flüssigkeit entlang einer durch das mindestens eine Flüssigkeitsführungselement vorgegebenen Ablaufrichtung von dem Mitnehmer abgeführt wird. Dies schließt beispielsweise ein, dass über das mindestens eine Flüssigkeitsführungselement Flüssigkeit in Richtung eines Randes des Mitnehmerkörpers führbar ist. Über das Flüssigkeitsführungselement kann somit im Betrieb des Fensterhebers an den Mitnehmer gelangende Flüssigkeit gezielt abgeführt und insbesondere gezielt von Abschnitten und/oder Komponenten des Mitnehmers und/oder des Fensterhebers weg geleitet werden. Beispielsweise lässt sich über das mindestens eine Flüssigkeitsführungselement sicherstellen, dass von dem Mitnehmer stammende Flüssigkeit, zum Beispiel Wasser, von einer den Mitnehmer verschieblich lagernden Führungsschiene und/oder von einem an dem Mitnehmer festgelegten Zugmittel weg geleitet wird.

In einer Weiterbildung ist beispielsweise vorgesehen, dass sich das mindestens eine Flüssigkeitsführungselement mit einem Ende über einen Rand des Mitnehmerkörpers hinaus erstreckt. Über das Flüssigkeitsführungselement kann dann somit an dem Mitnehmerkörper vorhandene Flüssigkeit von dem Mitnehmerkörper weg geleitet werden und an dem sich über den Rand hinaus erstreckenden Ende des Flüssigkeitsführungselements ablaufen.

Das Flüssigkeitsführungselement kann beispielsweise eine an dem Mitnehmerkörper vorgesehene, insbesondere an den Mitnehmerkörper ausgebildete Rippe, Vertiefung und/oder Rinne umfassen.

In einer Ausführungsvariante der vorgeschlagenen Lösung weist ein vorgeschlagener Mitnehmer einen Zugmittelverbindungsbereich für die Verbindung eines flexiblen Zugmittels mit dem Mitnehmerkörper auf, der zwei entlang einer Längsrichtung aufeinanderfolgende Nippelkammern aufweist. Zwischen diesen zwei Nippelkammern ist entsprechend der vorgeschlagenen Lösung eine Montageöffnung vorgesehen, über die jeweils ein Endabschnitt des flexiblen Zugmittels in die Nippelkammern einzusetzen ist. Über die in die Nippelkammern eingesetzten und hierin formschlüssig gehaltenen Endabschnitte ist nach bestimmungsgemäßer Montage eine Verstellkraft zum Verstellen der mit dem Mitnehmer verbundenen Fensterscheibe über das flexible Zugmittel an den Mitnehmer übertragbar. Zur Montageerleichterung ist die Montageöffnung ferner, bezogen auf die Längsrichtung, mit einer Länge vorgesehen, die wenigstens der Hälfte der Summe der Längen der zwei Nippelkammern entspricht. Insbesondere kann die Montageöffnung, bezogen auf die Längsrichtung, mit einer Länge vorgesehen sein, die wenigstens dem 0,8-fachen oder wenigstens der Summe der Längen der zwei Nippelkammern entspricht Derart sind beispielsweise zwei mit je einem Federelement versehene Endabschnitte des Zugmittels ohne Komprimierung der Federelemente über die eine gemeinsame Montageöffnung nacheinander in die Nippelkammern einsetzbar.

Dementsprechend kann die Montageöffnung des Zugmittelverbindungsbereichs beispielsweise in einer Ausführungsvariante eine Länge aufweisen, sodass zwei mit je einem Federelement versehene Endabschnitten des Zugmittels ohne Komprimierung der Federelemente über die eine Montageöffnung nacheinander in die entlang der Längsrichtung aufeinanderfolgenden Nippelkammern eingesetzt werden können. Über die wie vorgeschlagen dimensionierte Montageöffnung des Zugmittelverbindungsbereichs können beispielsweise bei einem als Seilzug ausgestalteten flexiblen Zugmittel zum Seillängenausgleich vorgesehene Druckfedern mit jeweils einem Seilnippel nacheinander durch die zwischen den Nippelkammern vorgesehene Montageöffnung ohne Kraftaufwand manuell (per Hand) eingelegt werden. Eine Montagehilfe für die Komprimierung einer Druckfeder, um diese bestimmungsgemäß in eine Nippelkammer an dem Mitnehmer einsetzen zu können, zu Beispiel ein sogenanntes Kraftpaket, ist hier dann folglich nicht nötig.

In einer Ausführungsvariante weist der Zugmittelverbindungsbereich einen wenigstens einseitig offenen Zugmittelführungskanal mit einer längserstreckten Zugmittelöffnung für das Einlegen eines Abschnitts des Zugmittels in den Zugmittelführungskanal auf. Bei der Montage des Zugmittels an den Mitnehmer wird somit ein Endabschnitt des Zugmittels über die Montageöffnung in die Nippelkammer eingesetzt, wobei ein sich von dem Endabschnitt weg erstreckender Abschnitt des Zugmittels über die Zugmittelöffnung in den sich an eine Nippelkammer anschließenden Zugmittelführungskanal eingelegt wird.

In einer hierauf basierenden Weiterbildung ist zwischen einer Zugmittelöffnung eines einer Nippelkammer zugeordneten Zugmittelführungskanals und der Montageöffnung eine Fettungsöffnung vorgesehen, über die eine Fettung der Nippelkammer von außen ermöglicht ist. Beispielsweise folgen somit entlang der Längsrichtung die Montageöffnung, die Fettungsöffnung einer Nippelkammer und eine Zugmittelöffnung für den sich an eine Nippelkammer anschließenden Zugmittelführungskanal aufeinander.

Für eine Erleichterung der Fettung über die Fettungsöffnung ist in einer Ausführungsvariante eine Breite der Fettungsöffnung größer als eine Breite der Montageöffnung, aber kleiner als eine Breite der Zugmittelöffnung des Zugmittelführungskanals. Durch die gegenüber der Montageöffnung reduzierte Breite der Fettungsöffnung ist sichergestellt, dass ein bestimmungsgemäß in die Nippelkammer eingesetzter und gegebenenfalls federbelasteter Endabschnitt des Zugmittels nicht über die Fettungsöffnung aus der Nippelkammer entfernt werden kann. Gleichzeitig ist über die gegenüber der Zugmittelöffnung des Zugmittelführungskanals größere Breite der Fettungsöffnung sichergestellt, dass eine Fettung der Nippelkammer, zum Beispiel mit Fettstein, erleichtert ist.

Entsprechend den vorstehenden Erläuterungen kann ein Scheibenverbindungsbereich ohne Weiteres mit einem Flüssigkeitsführungselement und/oder mit einem Zugmittelverbindungsbereich kombiniert werden. So kann beispielsweise ein Zugmittelverbindungsbereich an einem Mitnehmerkörper eines Mitnehmers vorgesehen sein, an dem seitlich und oberhalb des Zugmittelverbindungsbereiches ein Scheibenverbindungsbereich vorgesehen ist, der zwei oberhalb und seitlich zu dem Scheibenverbindungsbereich angeordnete elastisch verlagerbare Verbindungsbügel mit jeweils einer Rastnase und jeweils einem Verbindungsbügel gegenüberliegendem Positionierungsabschnitt sowie mindestens eine einen elastischen Auflageabschnitt aufweisende Basis aufweist. Mindestens ein Flüssigkeitsführungselement kann ergänzend an dem Mitnehmerkörper ausgebildet sein, um Flüssigkeit von dem Zugmittelverbindungsbereich gezielt nach außen zu einem Rand des Mitnehmerkörpers zu leiten und ablaufen zu lassen. Das Flüssigkeitsführungselement kann sich hierbei, bezogen auf die Montagerichtung der Fensterscheibe und/oder eine Verstellachse der Fensterscheibe nach bestimmungsgemäßer Montage des Fensterhebers, gerade unterhalb eines Verbindungsbügels an dem Mitnehmerkörper erstreckt.

Die beigefügten Figuren veranschaulichen exemplarisch mögliche Ausführungsvarianten der vorgeschlagenen Lösung.

Hierbei zeigen:
- Figuren 1A-1B: jeweils in perspektivischer Ansicht und mit Blick auf unterschiedliche Seiten eine Ausführungsvariante eines vorgeschlagenen Mitnehmers;
- Figur 2: in Seitenansicht und ausschnittsweise den Mitnehmer mit einer mit dem Mitnehmer verbundenen Fensterscheibe;
- Figur 3: in Rückansicht eine erste Phase einer Montage der Fensterscheibe an den Mitnehmer;
- Figuren 4A-4D: die Montage der Fensterscheibe an den Mitnehmer in mit der Figur 3 übereinstimmender Ansicht in weiteren Phasen;
- Figur 5: in vergrößertem Maßstab den Mitnehmer der Figuren 1A und 1B mit Blick auf einen Zugmittelverbindungsbereich des Mitnehmers;
- Figuren 6A-6C: verschiedene Ansichten des Mitnehmers der Figuren 1A und 1B unter Veranschaulichung einer Flüssigkeitsführungsstruktur, die an dem Mitnehmer vorgesehen ist;
- Figur 7: schematisch eine Fensterheberbaugruppe, in der ein vorgeschlagener Mitnehmer zum Einsatz kommt.

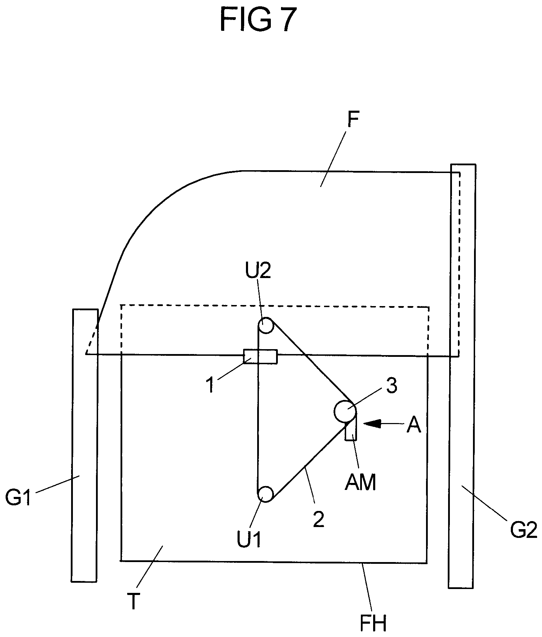

Die Figur 7 veranschaulicht exemplarisch einen Fensterheber für ein Kraftfahrzeug. Dieser Fensterheber umfasst eine Fensterheberbaugruppe FH mit einem verschieblich geführten Mitnehmer 1, mit dem eine Fensterscheibe F verbunden ist. Der Mitnehmer 1 ist mit einem flexiblen Zugmittel in Form eines Seilzugs 2 gekoppelt, der über mehrere Umlenkelemente U1, U2, zum Beispiel in Form von drehbar gelagerten Seilrollen, mittels eines Antriebs A verstellbar ist. Der Antrieb A, der wie die Umlenkelemente U1 und U2 an einem Trägerbauteil T angeordnet ist, treibt über einen Motor MA eine Seiltrommel 3 an. Durch Aufwickeln und Abwickeln des Seilzuges 2 auf respektive von der Seiltrommel 3 kann der Mitnehmer 1 längs verstellt werden. Hierüber wird dann die seitlich in Scheibenführungen G1 und G2 geführte Fensterscheibe F angehoben oder abgesenkt, je nach Drehrichtung der Seiltrommel 3. Bei dem in der Figur 7 dargestellten einsträngigen Fensterheber kann der Mitnehmer 1 entlang einer Führungsschiene verschieblich geführt sein, die durch das Trägerbauteil T ausgeformt oder an dem Trägerbauteil T fixiert ist.

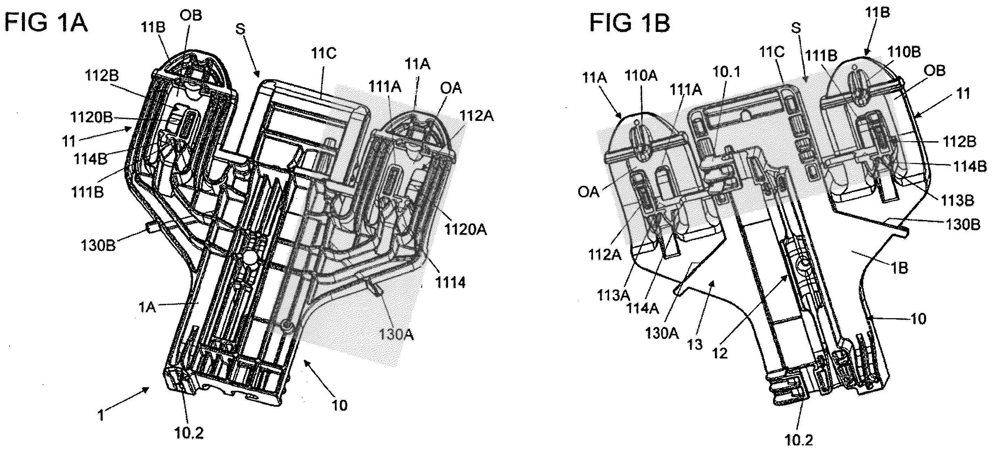

Eine Ausführungsvariante des Mitnehmers 1 gemäß der vorgeschlagenen Lösung ist in den Figuren 1 bis 6C dargestellt.

Der Mitnehmer 1 weist hierbei einen Mitnehmerkörper 10 auf, an dem insbesondere Schienenumgriffe 10.1, 10.2 für eine verschiebliche Lagerung des Mitnehmers 1 an einer Führungsschiene ausgeformt sind. Diese Schienenumgriffe 10.1 und 10.2 sind in einem mittigen Bereich des Mitnehmerkörpers 10 an einer Innenseite 1B des Mitnehmers 1 vorgesehen.

An einem bezogen auf den bestimmungsgemäß eingebauten Zustand oberen Ende des Mitnehmers 1 bildet der Mitnehmerkörper 10 einen Scheibenverbindungsbereich 11 mit zwei elastisch verlagerbaren Verbindungsbügeln 11A und 11B aus. Die nach oben an dem Mitnehmerkörper 10 vorstehenden Verbindungsbügel 11A und 11B sind z.B. entsprechend den Figuren 1A und 1B jeweils U-förmig ausgebildet. Über zwei Schenkel dieser U-Form ist jeder Verbindungsbügel 11A, 11B an dem Mitnehmerkörper 10 elastisch verlagerbar, sodass ein die beiden Schenkel verbindender Kopfabschnitt 11KA oder 11KB bei der Montage der Fensterscheibe F an den Mitnehmer 1 schwenkbar ist. An jedem dieser Kopfabschnitte 11KA, 11KB ist eine Rastnase 110A oder 110B ausgeformt, die bei bestimmungsgemäß an den Mitnehmer 1 angebrachter Fensterscheibe F in eine Verbindungsöffnung der Fensterscheibe F einschnappt, um die Fensterscheibe F und den Mitnehmer 1 aneinander festzulegen.

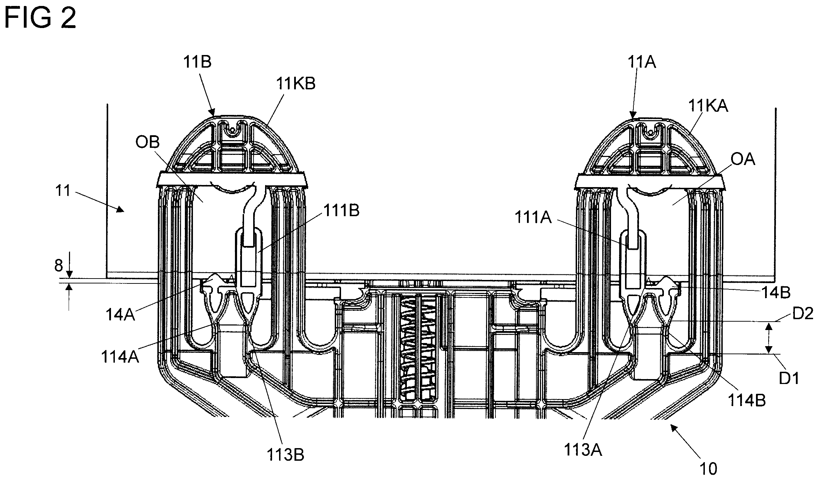

Zwischen den beiden Verbindungsbügeln 11A und 11B erstreckt sich ein Lagerabschnitt in Form eines Lagerstegs 11C. Gemeinsam mit den Verbindungsbügeln 11A und 11B definiert der mittige Lagersteg 11C eine Verbindungsspalt S an dem Scheibenverbindungsbereich 11, in den die Fensterscheibe F mit einer Unterkante K (vergleiche Figur 2) einzuführen ist, um die Fensterscheibe F an den Mitnehmer 1 festzulegen. Bei bestimmungsgemäß verbundener Fensterscheibe F liegen die beiden Verbindungsbügel 11A und 11B auf einer Seite der Fensterscheibe F vor, während der Lagersteg 11 C auf einer gegenüberliegenden Seite der Fensterscheibe F vorliegt. Im bestimmungsgemäß eingebauten Zustand ist beispielsweise eine Außenseite 1A des Mitnehmers 1 mit den Verbindungsbügeln 11A und 11B einer Außenseite eines Kraftfahrzeugs zugewandt, während die Innenseite 1B mit dem Lagersteg 11C einem Innenraum des Kraftfahrzeugs zugewandt ist.

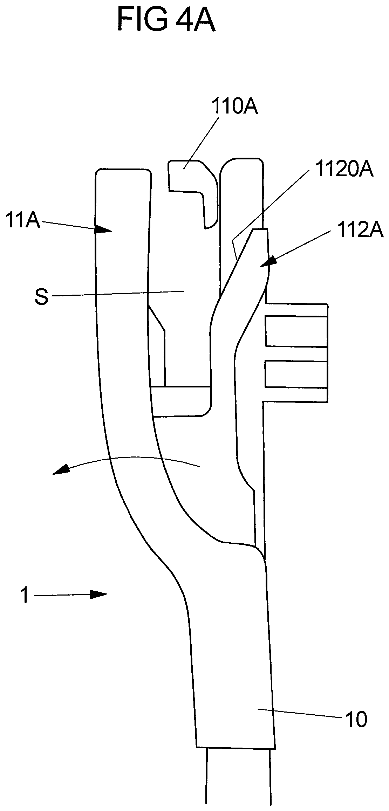

Im bestimmungsgemäß zusammengebauten Zustand liegt die Unterkante K der Fensterscheibe F jeweils an einer Basis 113A, 113B des Scheibenverbindungsbereichs 11 an, die ein unteres Ende des Verbindungsspaltes S definiert. Eine Basis 113A, 113B ist dabei jeweils im Bereich eines der Verbindungsbügel 11A, 11B vorgesehen und an einem Sockelabschnitt 114A oder 114B ausgebildet, der sich in eine zwischen den Schenkel eines Verbindungsbügels 11A oder 11B gebildete Aussparung OA oder OB erstreckt. Über den Sockelabschnitt 114A oder 114B ist eine Basis 113A oder 113B jeweils zu einer Schwenkachse D1 eines Verbindungsbügels 11A oder 11B nach oben beabstandet, um die ein Verbindungsbügel 11A oder 11B bei der Montage der Fensterscheibe F an den Mitnehmer 1 (nach außen) entlang einer Schwenkrichtung R1 schwenken kann, vgl. Figuren 4A bis 4C.

An jeder einem Verbindungsbügel 11A oder 11B zugeordneten Basis 113A oder 113B ist als Teil des Scheibenverbindungsbereichs 11 unter anderem ein der Außenseite 1A zugeordneter Lagerfinger 111 A oder 111 B ausgebildet. Ferner ist jedem Verbindungsbügel 11A oder 11B gegenüberliegend ein Positionierungsabschnitt in Form eines stiftartig von der Basis 113A oder 113B vorstehender Fanghaken 112A oder 112B vorgesehen. Jeder dieser Fanghaken 112A, 112 B trägt zur Stabilisierung der in den Verbindungsspalt S bei der Montage eingeführten Fensterscheibe F bei und leitet über eine Führungsfläche 1120A oder 1120B die (Scheiben-) Unterkante K in Richtung der Basis 113 A oder 113 B und damit in eine bestimmungsgemäße Rastposition, in der die Rastnasen 110 A und 110 B der Verbindungsbügel 11A und 11B in die zugehörigen Verbindungsöffnungen der Fensterscheibe F einschnappen können. Eine Führungsfläche 1120A, 1120B eines Fanghakens 112 A oder 112 B ist hierbei jeweils geneigt zu einer Montagerichtung M ausgeführt, entlang der die Fensterscheibe F (von oben) in den Verbindungsspalt S einzuführen ist.

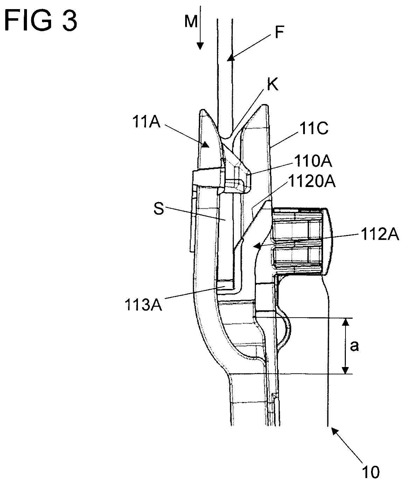

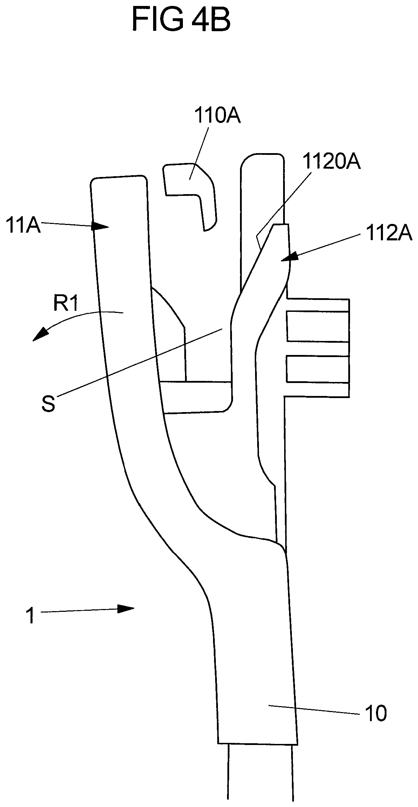

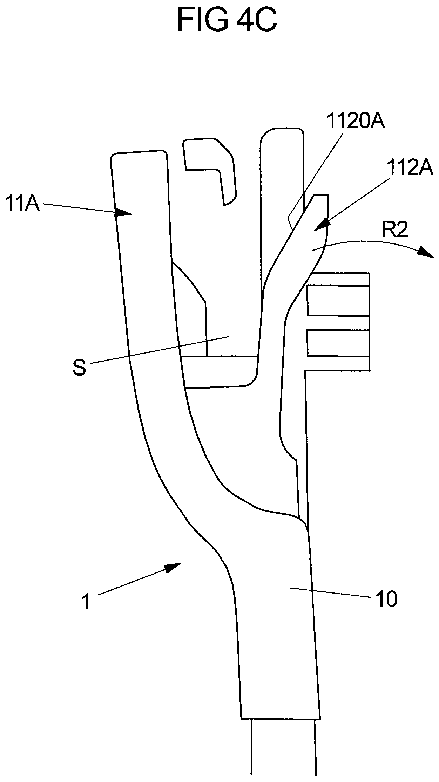

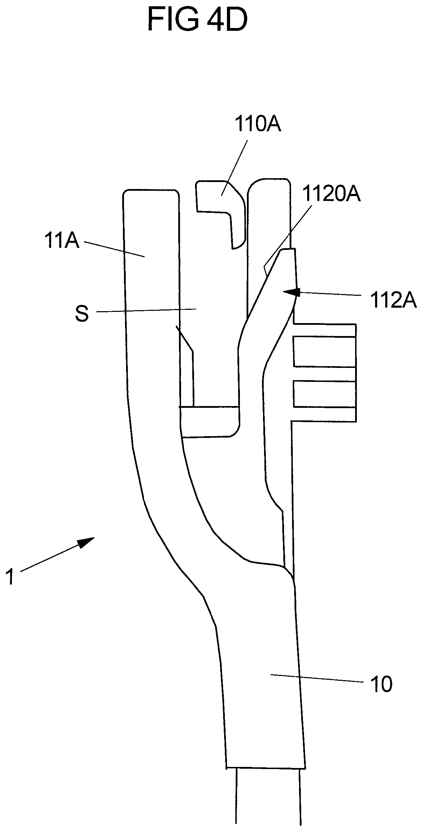

Wie anhand der Figuren 3 und 4A bis 4D für verschiedene Phasen bei der Montage der Fensterscheibe F an den Mitnehmer 1 dargestellt ist, verdrängt die in der Verbindungsspalt S eingeführte Fensterscheibe F mit ihrer Unterkante K zunächst unter Auflaufen auf die Rastnasen 110A und 110B die Verbindungsbügel 11A und 11B. Die Verbindungsbügel 11A und 11B werden hierdurch zunächst gemeinsam mit der jeweiligen Basis 113A, 113B gegenüber dem Rest des Mitnehmerkörpers 10, der über die Schienenumgriffe 10.1, 10.2 bereits an eine Führungsschiene gehalten ist, nach außen verlagert (Figur 4A). Anschließend schwenken die Verbindungsbügel 11A und 11B um ihre Schwenkachse D1 entlang der Schwenkrichtung R1 elastisch nach außen (Figur 4B). Damit die Fensterscheibe F dann bei weiterer Annäherung in Richtung der Basen 113A und 113 B nicht die Verbindungsbügel 11A und 11B weiter nach außen schwenkt und damit ein Verrasten mit den Verbindungsbügeln 11A und 11B unter Umständen unterbleibt, läuft die Unterkante K der Fensterscheibe F bei weiterer Verlagerung entlang der Montagerichtung M auf den Führungsflächen 1120A und 1120B der Fanghaken 112A und 112B auf, die den Verbindungsbügeln 11A und 11B gegenüberliegen (Figur 4C). Über die geneigt verlaufenden Führungsflächen 1120A und 1120B wird die Unterkante K der Scheibe F definiert nach unten in Richtung der Basen 113A und 113B nach unten in die vorgesehene Rastposition geführt (Figur 4D).

Wie insbesondere anhand der Figuren 2 und 4C bis 4D veranschaulicht ist, ist vorliegend eine elastische Verlagerbarkeit der Fanghaken 112A und 112B relativ zu den Verbindungsbügeln 11A, 11B zugelassen. So kann jeder Fanghaken 112A, 112B unter der Wirkung der entlang der Montagerichtung M weiter (nach unten) in den Verbindungsspalt S eingeführten Unterkante K entgegengesetzt zu den Verbindungsbügeln 11A und 11B und relativ zu den Verbindungsbügeln 11A und 11B entlang einer Schwenkrichtung R2 nach innen schwenken. Eine Schwenkachse D2 der Fanghaken 112A und 112B ist hierbei über die Sockelabschnitte 114A und 114B zu der Schwenkachse D1 der Verbindungsbügel 11A und 11B um einen Abstand a beabstandet.

Gleitet die Unterkante K entlang der geneigt verlaufenden Führungsflächen 1120A und 1120B der Fanghaken 112A und 112 B in den untersten Bereich des Verbindungsspaltes S zwischen den Lagerfingern 111A, 111B und den Fanghaken 112A und 112B, schwenken die Fanghaken 112A und 112B zurück. Sobald die Fensterscheibe F ferner ausreichend weit in Verbindungsspalt S eingeführt wurde, sodass die Rastnasen 110A und 110B in die Verbindungsöffnungen der Fensterscheibe F einschnappen können, schwenken auch die Verbindungsbügel 11A, 11B auf die Fanghaken 112, 112B zu zurück.

Die Fanghaken 112A und 112B an der durch die Sockelabschnitte 114A und 114B in der Aussparung OA und OB der Verbindungsbügel 11A und 11B teilweise befindlichen Basis 113A und 113B stellen einer Stabilisierung der Fensterscheibe F quer zur Montagerichtung M bei der Montage sicher. Über die Führungsflächen 1120A und 1120B wird die Unterkante K der zu montierenden Fensterscheibe F, wenn diese bereits in den Verbindungsspalt S des Scheibenverbindungsbereichs 11 eingeführt wurde, unter elastischer Verlagerung der Fanghaken 112A und 112B in die bestimmungsgemäße Rastposition geführt, in der die Rastnasen 110A und 110B jedes Verbindungsbügels 11A und 11B in die Verbindungsöffnungen der Fensterscheibe F einschnappen können. Es ist somit eine definierte Führung der Fensterscheibe F innerhalb des Verbindungsspaltes S bis in die Rastposition gewährleistet. Hierdurch ist die Montage der Fensterscheibe F an den Mitnehmer 1 erleichtert und wenig fehleranfällig.

Für eine definierte Auflage der bestimmungsgemäß an den Mitnehmer 1 montierten Fensterscheibe F sind an jeder Basis 113A, 113B Auflageabschnitte in Form von Aufdickungen 14A und 14B vorgesehen. Jede dieser Aufdickungen 14A und 14B ist aus einer an die Basis 113A oder 113B angespritzten, elastischen Weichkomponente ausgebildet, und zwar derart, dass die Aufdickung 14A,14B aus der elastischen Weichkomponente an der Basis 113A oder 113B zumindest geringfügig vorsteht. Die mit ihrer Unterkante K an den Audickungen 14A und 14B lokal aufliegende Fensterscheibe F ist somit zu dem Rest der jeweiligen Basis 113A, 113B über einen Spalt g entsprechend der Figur 2 beabstandet.

Unter Komprimierung der Aufdickungen 14A und 14B ist eine Relativverlagerung der Fensterscheibe F zu dem Mitnehmer 1 am Scheibenverbindungsbereich 11 ermöglicht. Die außermittig an dem Mitnehmer 1 vorgesehenen Aufdickungen 14A und 14B können somit eine definierte Abstützung der Fensterscheibe F an dem Mitnehmer 1 sicherstellen und beispielsweise beim Einfahren der Fensterscheibe F in eine obere Endposition eine zumindest geringfügige Verlagerung der Fensterscheibe F zu dem Mitnehmer 1 gestatten. Im Übrigen kann mit der Auflage an den Aufdickungen 14A und 14B eine Entklapperung erreicht und folglich ein Umschaltgeräusch vermieden werden. Insbesondere stützt sich die Fensterscheibe F definiert an den Aufdickungen 14A und 14B ab und ermöglicht so eine verbesserte Scheibenauflage der Unterkante K der Fensterscheibe F an dem Mitnehmer 1.

An dem Mitnehmerkörper 10 des Mitnehmers 1 ist ferner eine Flüssigkeitsführungsstruktur 13 ausgebildet, über die etwaige Flüssigkeit, wie zum Beispiel eindringendes Wasser, definiert von dem Mitnehmerkörper 10 abgeführt werden kann. Insbesondere ist die Flüssigkeitsführungsstruktur 13 derart ausgebildet, dass Wasser schräg in Richtung eines Randes 10RA, 10RB des Mitnehmerkörpers 10 und darüber hinaus geleitet wird, und zwar derart, dass das Wasser insbesondere von dem Zugmittel 2 und insbesondere einem Zugmittelverbindungsbereich 12 des Mitnehmers 1, an dem eine Kopplung des Seilzugs 2 mit dem Mitnehmer 1 erfolgt, weg geleitet wird. Die Flüssigkeitsführungsstruktur 13 des Mitnehmers 1 ist ferner derart ausgebildet, dass etwaige Flüssigkeit auch von den Schienenumgriffen 10.1 und 10.2 und damit im bestimmungsgemäß zusammengebauten Zustand der Fensterheberbaugruppe FH von einer Führungsschiene weg geleitet wird, an der der Mitnehmer 1 verschieblich gehalten ist.

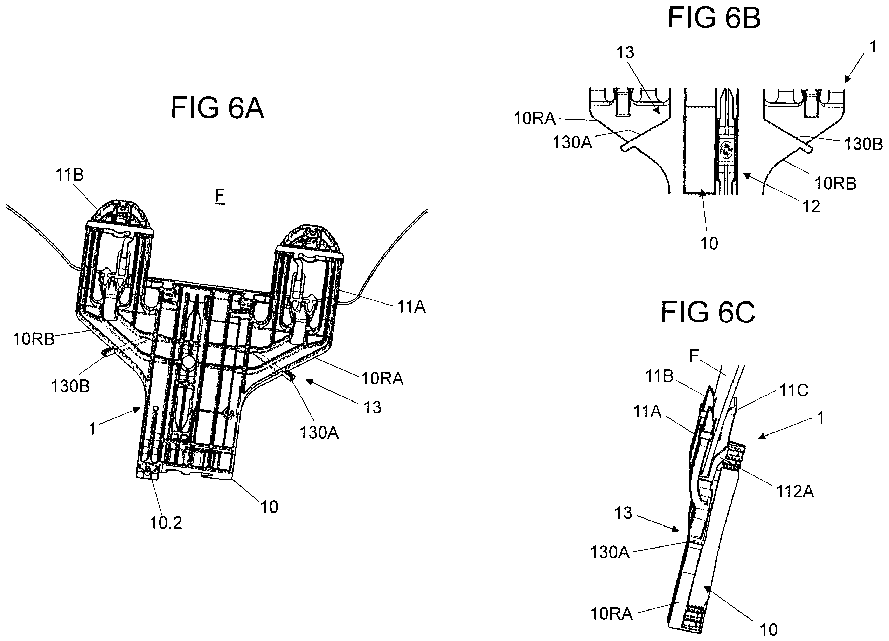

Bei dem in den Figuren 1A bis 6C dargestellten Mitnehmer 1 umfasst die Flüssigkeitsführungsstruktur 13 mehrere Flüssigkeitsführungselemente in Form von Ablaufrinnen 130A und 130B; vgl. insbesondere Figuren 6A bis 6C. Diese Ablaufrinnen 130A und 130B sind außermittig jeweils unterhalb eines Verbindungsbügels 11A und 11B vorgesehen. Zwei Ablaufrinnen 130A, 130B verlaufen hierbei zumindest abschnittsweise schräg zur Montagerichtung M der Fensterscheibe F seitlich nach unten. Jede Ablaufrinne 130A, 130B verläuft auf der Innenseite 1B des Mitnehmers 1 damit bezogen auf die Montagerichtung M der Fensterscheibe - sowie eine Verstellrichtung des Mitnehmers 1 im bestimmungsgemäß eingebauten Zustand - geneigt nach unten, sodass unter Wirkung der Schwerkraft an dem Mitnehmerkörper 10 vorhandene Flüssigkeit über die Ablaufrinnen 130A, 130B gezielt seitlich abfließen kann.

Jede Ablaufrinne 130A, 130B erstreckt sich dabei über einen (rechten oder linken) Rand 10RA, 10RB des Mitnehmerkörpers 10 hinaus, sodass an einem überstehenden Ende jeder Ablaufrinne 130A ,130B die Flüssigkeit vom Mitnehmerkörper 10 abfließen kann. Ein überstehendes Ende jeder Ablaufrinne 130A, 130B weist dabei einen L-förmigen Querschnitt auf und ist zur Außenseite 1A des Mitnehmers 1 hin offen. Derart wird über die Ablaufrinnen 130A, 130B abgeführte Flüssigkeit zusätzlich nach außen und damit im bestimmungsgemäß zusammengebauten Zustand der Fensterheberbaugruppe FH von den weiteren Komponenten der Fensterheberbaugruppe FH weg geleitet.

Zur Unterstützung des Abfließens von Flüssigkeit über die die Ablaufrinnen 130A, 130B aufweisende Flüssigkeitsführungsstruktur 13 kann der Mitnehmer 1 im bestimmungsgemäß zusammengebauten Zustand der Fensterheberbaugruppe FH zum Beispiel in einer oberen Endposition, die einer geschlossenen Position der Fensterscheibe entspricht, leicht in Richtung des Fahrzeuginnenraums und in Richtung eines Fahrzeughecks geneigt vorliegen.

Für das gezielte Abführen von Flüssigkeit von dem Mitnehmerkörper 10 kann die Flüssigkeitsführungsstruktur 13 alternativ oder ergänzend zu den Ablaufrinnen 130A, 130B auch Flüssigkeitsführungselemente aufweisen, die durch Rippen und/oder Vertiefungen an dem Mitnehmerkörper 10 ausgebildet sind.

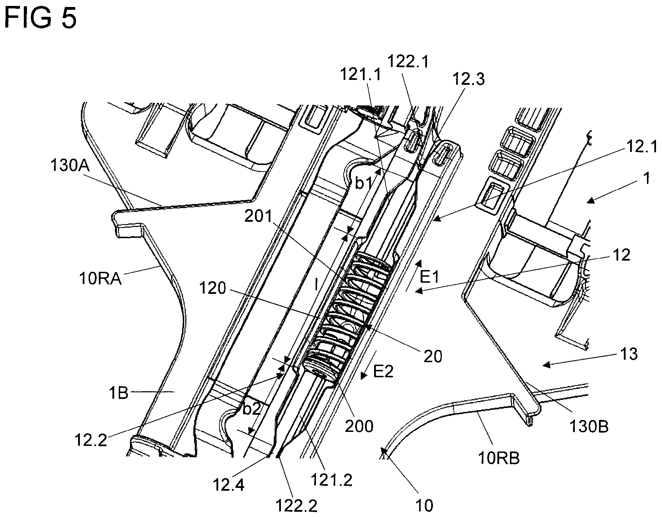

Wie insbesondere in der ausschnittsweise vergrößerten Darstellung der Figur 5 ersichtlich ist, weist der Mitnehmer 1 einen Zugmittelverbindungsbereich 12 für die Kopplung des Mitnehmers 1 mit dem Seilzug 2 auf. Der mittig an dem Mitnehmerkörper 10 angeordnete Zugmittelverbindungsbereich 12 weist zwei entlang einer Längsrichtung E1 aufeinander folgende Nippelkammern 12.1 und 12.2 auf, in die jeweils ein Seilzugendabschnitt 20 des Seilzuges 1 formschlüssig eingesetzt werden kann, um hierüber eine Verstellkraft zum Heben oder Senken der Fensterscheibe F an den Mitnehmer 1 zu übertragen.

Für das Einsetzen eines Seilzugendabschnitts 20 des Seilzugs 2 ist an dem Zugmittelverbindungsbereich 12 eine einzelne zwischen den beiden Nippelkammern 12.1 und 12.2 liegende Montageöffnung 120 vorgesehen. Über die eine Montageöffnung 120 ist dann sowohl ein Seilzugendabschnitt 20 entlang der Längsrichtung E1 in die eine (obere) Nippelkammer 12.1 als auch - im Anschluss - ein anderer Seilzugendabschnitt (in der Figur 5 nicht dargestellt) in eine entgegengesetzte Längs- oder Einsetzrichtung E2 in die andere (untere) Nippelkammer 12.2 einzusetzen. Ein Seilzugendabschnitt 20 weist vorliegend in an sich bekannter Weise einen Seilnippel 200 sowie ein sich hieran abstützendes Federelement in Form einer Druckfeder 201 zum Seillängenausgleich auf.

Bei der Montage des Seilzugs 2 über die Seilzugendabschnitte 20 an den Mitnehmer 1 besteht grundsätzlich die Schwierigkeit, dass regelmäßig die Druckfeder 201 unter hohem Kraftaufwand komprimiert werden muss, um ein Einsetzen in die jeweilige zugeordnete Nippelkammer 12.1 oder 12.2 zu ermöglichen. Bei dem dargestellten Mitnehmer 1 ist über die Montageöffnung 120 demgegenüber ein Einsetzen zweier Seilzugendabschnitte 20 nacheinander ohne Kraftaufwand per Hand und insbesondere ohne Komprimierung der Druckfedern 201 möglich.

So weist die Montageöffnung 120 in dem dargestellten Ausführungsbeispiel eine Länge l entlang der Längsrichtung E1 auf, die mindestens der Summe der Längen b1 und b2 der benachbarten Nippelkammern 12.1 und 12.2 entspricht. Dementsprechend kann ein Seilnippel 200 mit der unkomprimierten Druckfeder 201 in die Montageöffnung 120 eingelegt und anschließend in die zugehörige Nippelkammer 12.1 12.2 entlang der Längs- oder Einsetzrichtung E1 oder E2 eingeschoben oder eingezogen werden. Der anschließend über die Montageöffnung 120 zur Verfügung stehende Raum reicht dann wieder aus, um auch den anderen Seilnippel 200 mit seiner Druckfeder 201 mit unkomprimierter Druckfeder 201 einzusetzen und in die gegenüberliegende Nippelkammer 12.2 oder 12.1 einzuschieben oder einzuziehen.

Zur Erleichterung der Fettung einer Nippelkammer 12.112.2 weist der Zugmittelverbindungsbereich 12 an jeder Nippelkammer 12.1, 12.2 eine Fettungsöffnung 121.1 oder 121.2 auf. Diese Fettungsöffnung 121.1, 121.2 schließt sich jeweils an die zentrale Montageöffnung 120 (nach oben oder unten) an und ist zwischen der Montageöffnung 120 und einer Zugmittelöffnung 122.1 oder 122.2 eines Seilführungskanals 12.3, 12.4 vorgesehen, über den sich der mit dem Mitnehmer 1 bestimmungsgemäß verbundene Seilzug 2 von der jeweiligen Nippelkammer 12.1 oder 12.2 weg erstreckt. Jede Fettungsöffnung 121.1 oder 121.2 weist dabei eine Breite auf, die kleiner ist als die Breite der zentralen Montageöffnung 120, um den mit der Druckfeder 201 eingesetzten Seilnippel 200 in der Nippelkammer 12.1 oder 12.2 zu halten. Gleichzeitig ist die Breite der Fettungsöffnung 121.1 oder 121.2 jedoch um ein Vielfaches größer als die Breite der Zugmittelöffnung 122.1, 122.2, über die bei der Montage der Seilzug 2 in den jeweiligen Seilführungskanal 12.3 oder 12.4 eingelegt wird. Die Abmaße der Fettungsöffnung 121.1 oder 121.2 sind beispielsweise so gewählt, dass eine Fettung der jeweilige Nippelkammer 12.1 oder 12.2 zum Beispiel mit Fettstein von außen ermöglicht ist.

### Bezugszeichenliste

- 1: Mitnehmer
- 10: Mitnehmerkörper
- 10.1, 10.2: Schienenumgriff
- 10RA, 10RB: Rand
- 11: Scheibenverbindungsbereich
- 110A, 110B: Rastnase
- 111A, 111B: Lagerfinger (Lagerabschnitt)
- 1120A, 1120B: Führungsfläche
- 112A, 112B: Fanghaken (Positionierungsabschnitt)
- 113A, 113B: Basis
- 114A, 114B: Sockelabschnitt
- 11A, 11B: Verbindungsbügel
- 11C: Lagersteg (Lagerabschnitt)
- 11KA, 11KB: Kopfabschnitt
- 12: Zugmittelverbindungsbereich
- 12.1, 12.2: Nippelkammer
- 12.3, 12.4: Seilführungskanal
- 120: (Zentrale) Montageöffnung
- 121.1, 121.2: Fettungsöffnung
- 122.1, 122.2: Zugmittelöffnung
- 13: Flüssigkeitsführungsstruktur
- 130A, 130B: Ablaufrinne (Flüssigkeitsführungselement)
- 14A, 14B: Aufdickung (Auflageabschnitt)
- 1A, 1B: Außen- / Innenseite
- 2: Seilzug (Zugmittel)
- 20: Seilzugendabschnitt
- 200: Seilnippel
- 201: Druckfeder (Federelement)
- 3: Seiltrommel
- A: Antrieb
- a: Abstand
- AM: Motor
- b1, b2: Länge
- D1, D2: Schwenkachse
- E1, E2: Einsetzrichtung / Längsrichtung
- F: Fensterscheibe
- FH: Fensterheberbaugruppe
- g: Spalt
- G1, G2: Scheibenführung
- K: Scheibenunterkante
- I: Länge
- M: Montagerichtung
- OA, OB: Aussparung
- R1, R2: Schwenkrichtung
- S: Verbindungsspalt
- T: Trägerbauteil
- U1, U2: Umlenkelement

## Patentansprüche

1. Mitnehmer für einen Fahrzeugfensterheber, der mit einer zu verstellenden Fensterscheibe (F) verbindbar ist, wobei der Mitnehmer (1) einen Mitnehmerkörper (10) und wenigstens einen Scheibenverbindungsbereich (11) umfasst, über den der Mitnehmer (1) an der zu verstellenden Fensterscheibe (F) festlegbar ist und der einen Verbindungsspalt (S) definiert, in den die zu verbindende Fensterscheibe (S) mit einer Unterkante (K) einzuführen ist, sodass die Unterkante (K) im bestimmungsgemäß verbundenen Zustand zwei Basen (113A, 113B) des Scheibenverbindungsbereich (11) gegenüberliegt,
wobei der Scheibenverbindungsbereich (11) zwei an dem Mitnehmerkörper (10) vorgesehene Verbindungsbügel (11A, 11B) aufweist, an denen jeweils eine Rastnase (110A, 110B) für den formschlüssigen Eingriff in eine an der Fensterscheibe (F) vorgesehene Verbindungsöffnung vorgesehen ist und denen jeweils mindestens ein Positionierungsabschnitt (112A, 112B) gegenüberliegt,
wobei, für die Montage der Fensterscheibe (F) an den Mitnehmer (1) entlang einer Montagerichtung (M), die Verbindungsbügel (11A, 11B) an dem Mitnehmerkörper (10) elastisch verlagerbar sind und die den Verbindungsbügeln (11A, 11B) jeweils gegenüberliegenden Positionierungsabschnitte (112A, 112B) jeweils eine geneigt zu der Montagerichtung (M) verlaufende Führungsfläche (1120A, 1120B) ausbilden, über die die in den Verbindungsspalt (S) eingeführte Unterkante (K) der Fensterscheibe (F) in Richtung der Basis (113A, 113B) geleitet wird,
wobei die zwei Verbindungsbügel (11A, 11B) jeweils U-förmig ausgebildet sind und über zwei Schenkel und einen die Schenkel verbindenden Kopfabschnitt (11KA, 11KB) eines U-förmigen Verbindungsbügels (11A, 11B) jeweils eine Aussparung (OA, OB) in dem jeweiligen Verbindungsbügel (11A, 11B) umrandet ist,
wobei die Verbindungsbügel (11A, 11B) des Scheibenverbindungsbereichs (11) jeweils um eine erste Schwenkachse (D1) elastisch schwenkbar sind und die jeweilige Basis (113A, 113B) des Scheibenverbindungsbereichs (11) zu dieser Schwenkachse (D1) beabstandet ist,
wobei ein jeweiliger Positionierungsabschnitt (112A, 112B), für die Montage der Fensterscheibe (F) an den Mitnehmer (1), ebenfalls elastisch verlagerbar ist und um eine zu der ersten Schwenkachse (D1) beabstandete zweite Schwenkachse (D2) elastisch schwenkbar gehalten ist, und
jede Basis (113A, 113B) an einem Sockelabschnitt (114A, 114B) ausgebildet ist, der an dem Mitnehmerkörper (10) in Richtung des jeweiligen Kopfabschnitts (11KA, 11KB) eines jeweils zugehörigen U-förmigen Verbindungsbügels (11A, 11B) vorsteht und sich zumindest teilweise in der Aussparung (OA, OB) des zugehörigen Verbindungsbügels (11A, 11B) erstreckt, **dadurch gekennzeichnet, dass** jeder Positionierungsabschnitt an der zugeordneten Basis vorgesehen ist und von der zugeordneten Basis vorsteht.

2. Mitnehmer nach Anspruch 1, **dadurch gekennzeichnet, dass** ein jeweiliger Positionierungsabschnitt (112A, 112B) der zugehörigen Aussparung (OA, OB) gegenüberliegt.

3. Mitnehmer nach Anspruch 1 oder 2, **dadurch gekennzeichnet, dass** die erste Schwenkachse (D1) über den Sockelabschnitt (114A, 114B) jeweils zu der Basis (113A, 113B) beabstandet ist.

4. Mitnehmer nach einem der Ansprüche 1 bis 3, **dadurch gekennzeichnet, dass**, für die Abstützung der eingeführten Fensterscheibe (F) quer zur Montagerichtung (M), zusätzlich auf Seiten eines Verbindungsbügels (11A, 11B) jeweils ein Lagerfinger oder -vorsprung (111A, 111B) an dem Sockelabschnitt (114A, 114B) zwischen den zwei Schenkeln des jeweiligen Verbindungsbügels (11A, 11B) vorhanden ist.

5. Mitnehmer nach einem der vorhergehenden Ansprüche, **dadurch gekennzeichnet, dass** der jeweilige Positionierungsabschnitt (112A, 112B) des Scheibenverbindungsbereichs (11) stiftförmig ausgebildet ist.

6. Mitnehmer nach einem der vorhergehenden Ansprüche, **dadurch gekennzeichnet, dass** zwei sich gegenüberliegende Seiten des Verbindungsspalt (S) des Scheibenverbindungsbereichs (11) jeweils insbesondere durch einen der Verbindungsbügel (11A, 11B) und einen an dem Mitnehmerkörper (10) vorstehenden Lagerabschnitt (11C) definiert sind.

7. Mitnehmer nach Anspruch 6, **dadurch gekennzeichnet, dass** der Lagerabschnitt (11C) zwischen den zwei Verbindungsbügeln (11A, 11B) vorgesehen ist.

8. Mitnehmer nach einem der vorhergehenden Ansprüche, **dadurch gekennzeichnet, dass** mindestens ein an der Basis (113A, 113B) vorstehender Auflageabschnitt (14A, 14B) aus einem elastischen Material für die Auflage der Unterkante (K) der Fensterscheibe (F) vorgesehen ist, wobei der an der Basis (113A, 113B) vorstehende Auflageabschnitt (14A, 14B) des Scheibenverbindungsbereichs (11) optional durch eine Weichkomponente ausgebildet ist.

9. Mitnehmer nach Anspruch 8, **dadurch gekennzeichnet, dass** der Auflageabschnitt (14A, 14B) durch eine lokal vorstehende Aufdickung der Weichkomponente an der Basis (113A, 113B) gebildet ist.

## Claims

1. A driver for a vehicle window lifter, which can be connected to a window pane (F) to be adjusted, wherein the driver (1) comprises a driver body (10) and at least one pane connecting region (11) via which the driver (1) can be fixed at the window pane (F) to be adjusted and which defines a connecting gap (S) into which the window pane (S) to be connected is to be introduced with a lower edge (K) so that in the properly connected state the lower edge (K) faces two bases (113A, 113B) of the pane connecting region (11),
wherein the pane connecting region (11) includes two connecting brackets (11A, 11B) provided on the driver body (10), on each of which a latching nose (110A, 110B) is provided for the positive engagement in a connecting opening provided on the window pane (F) and opposite each of which at least one positioning portion (112A, 112B) is provided,
wherein, for mounting the window pane (F) to the driver (1) along a mounting direction (M), the connecting brackets (11A, 11B) are elastically displaceable on the driver body (10) and the positioning portions (112A, 112B) each facing the connecting brackets (11A, 11B) each form a guide surface (1120A, 1120B) extending with an inclination relative to the mounting direction (M), via which the lower edge (K) of the window pane (F) introduced into the connecting gap (S) is guided in the direction of the base (113A, 113B),
wherein the two connecting brackets (11A, 11B) each are of U-shaped design, and a cutout (OA, OB) in the respective connecting bracket (11A, 11B) each is bordered via two legs and a head portion (11KA, 11KB) of a U-shaped connecting bracket (11A, 11B) connecting the legs,
wherein the connecting brackets (11A, 11B) of the pane connecting region (11) each can be elastically pivoted about a first pivot axis (D1) and the respective base (113A, 113B) of the pane connecting region (11) is spaced apart from this pivot axis (D1),
wherein a respective positioning portion (112A, 112B), for mounting the window pane (F) to the driver (1), likewise is elastically displaceable and is held so as to be elastically pivoted about a second pivot axis (D2) spaced apart from the first pivot axis (D1), and
each base (113A, 113B) is formed on a pedestal portion (114A, 114B) which protrudes from the driver body (10) in the direction of the respective head portion (11KA, 11KB) of a respectively associated U-shaped connecting bracket (11A, 11B) and at least partly extends in the cutout (OA, OB) of the associated connecting bracket (11A, 11B), **characterized in that** each positioning portion is provided on the associated base and protrudes from the associated base.

2. The driver according to claim 1, **characterized in that** a respective positioning portion (112A, 112B) faces the associated cutout (OA, OB).

3. The driver according to claim 1 or 2, **characterized in that** the first pivot axis (D1) is each spaced apart from the base (113A, 113B) via the pedestal portion (114A, 114B).

4. The driver according to any of claims 1 to 3, **characterized in that**, for supporting the introduced window pane (F) transversely to the mounting direction (M), a bearing finger or protrusion (111A, 111B) each is additionally present on the sides of a connecting bracket (11A, 11B) on the pedestal portion (114A, 114B) between the two legs of the respective connecting bracket (11A, 11B).

5. The driver according to any of the preceding claims, **characterized in that** the respective positioning portion (112A, 112B) of the pane connecting region (11) is of pin-shaped design.

6. The driver according to any of the preceding claims, **characterized in that** two mutually opposite sides of the connecting gap (S) of the pane connecting region (11) each are defined in particular by one of the connecting brackets (11A, 11B) and a bearing portion (11C) protruding from the driver body (10).

7. The driver according to claim 6, **characterized in that** the bearing portion (11C) is provided between the two connecting brackets (11A, 11B).

8. The driver according to any of the preceding claims, **characterized in that** at least one bearing portion (14A, 14B) made of an elastic material and protruding from the base (113A, 113B) is provided for supporting the lower edge (K) of the window pane (F), wherein the bearing portion (14A, 14B) of the pane connecting region (11), which protrudes from the base (113A, 113B), optionally is formed by a soft component.

9. The driver according to claim 8, **characterized in that** the bearing portion (14A, 14B) is formed by a locally protruding thickening of the soft component on the base (113A, 113B).

## Revendications

1. Entraîneur pour un lève-vitre de véhicule, qui peut être relié à une vitre (F) à régler, l'entraîneur (1) comprenant un corps d'entraîneur (10) et au moins une zone de liaison de vitre (11), par laquelle l'entraîneur (1) peut être fixé à la vitre (F) à régler et qui définit une fente de liaison (S), dans laquelle la vitre (S) à relier doit être introduite avec un bord inférieur (K), de sorte que dans l'état proprement lié le bord inférieur (K) se trouve en face de deux bases (113A, 113B) de la zone de liaison de vitre (11),
la zone de liaison de vitre (11) présentant deux barres de liaison (11A, 11B) prévus sur le corps d'entraîneur (10), sur chacun desquels est prévu un ergot d'encliquetage (110A, 110B) pour l'engagement par complémentarité de forme dans une ouverture de liaison prévue sur la vitre (F) et en face desquels se trouve respectivement au moins une section de positionnement (112A, 112B),
dans lequel, pour le montage de la vitre (F) sur l'entraîneur (1) le long d'un sens de montage (M), les barres de liaison (11A, 11B) peuvent être déplacées élastiquement sur le corps d'entraîneur (10) et les sections de positionnement (112A, 11B) respectivement opposées aux barres de liaison (11A, 11B) forment chacune une surface de guidage (1120A, 1120B) inclinée par rapport au sens de montage (M), par laquelle le bord inférieur (K) de la vitre (F), introduit dans la fente de liaison (S), est guidé en direction de la base (113A, 113B),
les deux barres de liaison (11A, 11B) étant chacune en forme de U et un évidement (OA, OB) étant respectivement bordé dans la barre de liaison respective (11A, 11B) par l'intermédiaire de deux branches et d'une partie de tête (11KA, 11KB) d'une barre de liaison en forme de U (11A, 11B), la partie de tête (11 KA, 11KB) reliant les branches,
les barres de liaison (11A, 11B) de la zone de liaison de vitre (11) pouvant chacun pivoter de manière élastique autour d'un premier axe de pivotement (D1) et la base respective (113A, 113B) de la zone de liaison de vitre (11) étant espacée de cet axe de pivotement (D1),
une section de positionnement respective (112A, 112B), pour le montage de la vitre (F) sur l'entraîneur (1), pouvant également être déplacée de manière élastique et étant maintenue de manière à pouvoir pivoter élastiquement autour d'un deuxième axe de pivotement (D2) espacé du premier axe de pivotement (D1), et
chaque base (113A, 113B) étant formée sur une partie de socle (114A, 114B) qui fait saillie du corps d'entraîneur (10) en direction de la partie de tête respective (11 KA, 11 KB) d'une barre de liaison en forme de U respectivement associé (11A, 11B) et s'étendant au moins partiellement dans l'évidement (OA, OB) de la barre de liaison associée (11A, 11B), **caractérisé en ce que** chaque section de positionnement est prévue sur la base associée et fait saillie de la base associée.

2. Entraîneur selon la revendication 1, **caractérisé en ce qu'**une section de positionnement respective (112A, 112B) fait face à l'évidement associé (OA, OB).

3. Entraîneur selon la revendication 1 ou 2, **caractérisé en ce que** le premier axe de pivotement (D1) est espacé de la base (113A, 113B) via la partie de socle (114A, 114B) respectivement.

4. Entraîneur selon l'une quelconque des revendications 1 à 3, **caractérisé en ce que**, pour le support de la vitre (F) insérée transversalement au sens de montage (M), il y a en outre, sur les côtés d'une barre de liaison (11A, 11B), respectivement un doigt ou une saillie de palier (111A, 111B) sur la partie de socle (114A, 114B) entre les deux branches de la barre de liaison respective (11A, 11B).

5. Entraîneur selon l'une quelconque des revendications précédentes, **caractérisé en ce que** la section de positionnement respective (112A, 112B) de la zone de liaison de vitre (11) est en forme de tige.

6. Entraîneur selon l'une quelconque des revendications précédentes, **caractérisé en ce que** deux côtés opposés de la fente de liaison (S) de la zone de liaison de vitre (11) sont définis chacun en particulier par l'une des barres de liaison (11A, 11B) et une partie de palier (110) en saillie sur le corps d'entraîneur (10).

7. Entraîneur selon la revendication 6, **caractérisé en ce que** la partie de palier (110) est prévue entre les deux barres de liaison (11A, 11B).

8. Entraîneur selon l'une quelconque des revendications précédentes, **caractérisé en ce qu'**au moins une partie d'appui (14A, 14B) en saillie sur la base (113A, 113B) est prévue en un matériau élastique pour le support du bord inférieur (K) de la vitre (F), la partie d'appui (14A, 14B) en saillie sur la base (113A, 113B) de la zone de liaison de vitre (11) étant réalisée optionnellement par un composant souple.

9. Entraîneur selon la revendication 8, **caractérisé en ce que** la partie d'appui (14A, 14B) est formée par un épaississement localement saillant du composant souple sur la base (113A, 113B).
